# EUROPÄISCHE PATENTSCHRIFT

(11) **EP 2 984 053 B1**
(45) Veröffentlichungstag und Bekanntmachung des Hinweises auf die Patenterteilung: **01.11.2017**
(21) Anmeldenummer: 14716278.8
(22) Anmeldetag: 04.04.2014
(51) Int. Cl.: C04B 7/44

(54) **ANLAGE ZUR HERSTELLUNG VON ZEMENTKLINKER MIT VERGASUNGSREAKTOR FÜR SCHWIERIGE BRENNSTOFFE**
PLANT FOR PRODUCING CEMENT CLINKER WITH GASIFICATION REACTOR FOR DIFFICULT FUELS
INSTALLATION SERVANT À FABRIQUER DU CLINKER AVEC UN RÉACTEUR DE GAZÉIFICATION POUR COMBUSTIBLES DIFFICILES

(30) Priorität: 11.04.2013 DE 102013006236
(43) Veröffentlichungstag der Anmeldung: 17.02.2016
(73) Patentinhaber: KHD Humboldt Wedag GmbH, 51067 Köln (DE)
(72) Erfinder: SCHÜRMANN, Heiko, 51373 Leverkusen (DE); FEISS, Marc, 51063 Köln (DE)
(86) Internationale Anmeldenummer: PCT/EP2014/056822
(87) Internationale Veröffentlichungsnummer: WO 2014/166838

(56) Entgegenhaltungen:
- EP-A2- 0 764 614
- WO-A1-2005/108892
- WO-A1-2008/120109
- DE-A1- 3 411 144
- DE-U1-202007 006 797

## Beschreibung

Die Erfindung betrifft eine Anlage zur Herstellung von Zementklinker, aufweisend in Materialflussrichtung gesehen mindestens einen Wärmetauscher zum Vorwärmen von Rohmehl, mindestens einen darauf folgenden Calcinator zum Calcinieren des Rohmehls, mindestens einen Drehrohrofen zum Sintern des calcinierten Rohmehls, mindestens einen Klinkerkühler zum Kühlen des gesinterten Zementklinkers, wobei eine Brennvorrichtung für schwierige Brennstoffe, die unvorhersehbares Zündverhalten haben, in der Regel schlecht zünden oder eine Zündhilfe in Form von starker Aufheizung und auch erster einsetzender Pyrolyse benötigen, die schwierigen Brennstoffe verschwelt, pyrolysiert und/oder verbrennt, und ein dazu korrespondierendes Verfahren zur Herstellung von Zement.

Zur Herstellung von Zementklinker wird ein Gemisch aus kalkhaltigem Gestein und aus silikathaltigem Gestein vermahlen und einer Wärmebehandlung unterzogen, bei welcher der im Rohmehl enthaltene Kalk formell von Kohlendioxid (CO₂) befreit und in gebrannten Kalk (CaO) überführt wird. In einem weiteren Schritt wird das durch die CO₂-Befreiung entsäuerte Rohmehl, das aus dem entsäuerten kalkhaltigem Gestein und aus dem bis hier noch unveränderten silikathaltigem Gestein besteht, in der Hitze zu verschiedenen Calciumsilikatphasen gesintert.

Die Entsäuerung und auch das Sintern von Rohmehl sind endotherme Prozesse, die zu ihrer Umsetzung Wärmeenergie benötigen. Die zur Herstellung von Zementklinker notwendige Wärmeenergie wird dem Prozess durch Verbrennung verschiedener Brennstoffe zugeführt. Hochwertige und damit auch hochkalorische Brennstoffe werden in einer Anlage zur Herstellung von Zementklinker an wichtigen Stellen zur Erzeugung hoher Temperatur zugeführt, wie beispielsweise einem Brenner zur Erzeugung hoher Temperaturen in einem Drehrohrofen zum Sintern zu Calciumsilikat. An anderen Stellen, bei denen die Erzeugung hoher Temperaturen weniger wichtig ist als die Erzeugung von reduktiven Bedingungen, kann auch auf weniger kalorische Brennstoffe zurückgegriffen werden, wie beispielsweise die Verbrennung von getrocknetem Hausmüll, Tierkadavern, geschredderten Autoreifen, Verbrennung von Lösemittelabfällen oder Altpapier. Andere in größeren Mengen verfügbare Brennstoffe, die nur schwer zünden, sind Petcoke, Anthrazit, aschereiche Kohlen und auch alternative Brennstoffe aus industriellen oder kommunalen Abfällen. Ein wesentlicher Kostentreiber der variablen Kosten bei der Herstellung von Zement ist der Preis für Brennstoffe. Die zur Verfügung stehenden Brennstoffe weisen unterschiedliche Qualitäten in Bezug auf Brennbarkeit, Brennwert, Feuchtigkeit, Flammpunkt und Gehalt an Metallen und anderen Schadstoffen auf, die durch Verbrennung nicht zerstört werden können.

Sogenannte schwierige Brennstoffe haben ein unvorhersehbares Zündverhalten, zünden in der Regel schlecht oder benötigen eine Zündhilfe in Form von starker Aufheizung und gegebenenfalls erster einsetzender Pyrolyse. Zum Einsatz dieser schwierigen Brennstoffe ist man daher dazu übergegangen, diese Brennstoffe in einem eigens dafür vorgesehenen Schwelofen zu pyrolysieren, zu schwelen und/oder unter Umwälzung und Aufheizung mit einem Brenner langsam zu verbrennen.

Bei der Schwelung von solchen schwierigen Brennstoffen, meist grobstückigen Abfallstoffen, in einem Drehrohrofen macht es aber Schwierigkeiten, gleichmäßige Bedingungen für die thermische Behandlung zu schaffen, insbesondere das Auftreten von Temperaturspitzen zu vermeiden, die zu unerwünschten Feststoffanbackungen im Drehofen führen können.

Aus der EP0764614A1 ist eine Zementklinkerproduktionslinie bekannt mit einem neben der Calciniereinrichtung installierten, als Nebenreaktor betriebenen separaten Schachtvergaser, in dem grobstückige Abfallstoffe, insbesondere Altreifen, vergast werden sollen. Dabei wird der Schachtvergaser von oben mit den Altreifen und mit einem Teil der vom Klinkerkühler kommenden Tertiärluft als Vergasungsmittel beschickt. Das im Schachtvergaser entstehende Produktgas wird als Brenngas in den Calcinator geleitet, und die Reststoffe der im Schachtvergaser vergasten Altreifen werden durch eine mechanische Abstoßvorrichtung in den Drehofeneinlaufschacht transportiert. Der Vergasungsprozess im Schachtvergaser kann erheblichen Schwankungen unterliegen, da die im Schachtvergaser aufeinandergestapelten Altreifen während ihrer thermischen Behandlung nicht umgeschichtet werden. Eine Einführung von Rohmehl in den die Abfallstoffe, insbesondere Altreifen thermisch behandelnden Schachtvergaser findet nicht statt.

Aus der WO200109548 ist eine Zementklinkerproduktionslinie bekannt neben deren Calcinator ein separater Reaktor installiert ist, der wiederum von oben mit Abfallstoffen befüllt wird, die im Reaktor mit Tertiärluft aus dem Klinkerkühler verbrannt werden sollen. In den Reaktor wird ebenfalls von oben auch ein Teilstrom des Zementrohmehls eingeführt. Die Abfallstoffe und der Rohmehlteilstrom sollen im Verbrennungsreaktor auf einer oberhalb des Reaktorbodens installierten drehbaren Scheibe abgelegt werden, und durch Drehung der Scheibe sollen die thermisch behandelten Feststoffe ausgeschleust und in den Calcinator bzw. in den Drehofeneinlauf eingeschleust werden, und das Verbrennungsabgas wird ebenfalls in den Calcinator eingeführt. Eine Vermischung der Abfallstoffe, besonders wenn dieser grobstückig vorliegt, findet in dem bekannten Verbrennungsreaktor ebenfalls nicht statt, so dass nicht von gleichmäßigen Verbrennungsbedingungen und damit nicht von einer gleichmäßigen Rohmehl-Vorcalcinierung auszugehen ist.

Aus der DE3320670A, DE3411144A und DE3520447A ist es bei einer Anlage zur Herstellung von Zementklinker mit Verwertung heizwerthaltiger Abfallstoffe ebenfalls bekannt, die Abfallstoffe in einem separaten Drehofen zu verschwelen bzw. zu verbrennen und das Schwelgas/Abgas bei der thermischen Rohmehlbehandlung zu nutzen. Jedoch wird in den Schwelofen/Verbrennungsofen keinerlei Zementrohmehl eingeführt.

In der WO2010032149 wird ein Verfahren zum Brennen von Rohstoffen wie Zementrohmehl, Kalkstein oder anderen mineralischen Rohstoffen beschrieben. Nach dem dort beschriebenen Verfahren werden Rohmehl und ein sekundärer Brennstoff getrennt voneinander in denselben Drehrohrofen gegeben.

In der EP1926959A1 wird eine Vorrichtung sowie ein Verfahren zur Herstellung von Zementklinker aus Zementrohmaterial offenbart, wobei Stäube mit Hilfe von Verbrennungsluft und Brennstoff in einem eigens dafür vorgesehenen Staubbrennreaktor wärmebehandelt werden, der als Drehrohrofen ausgestaltet ist. Dabei wird zumindest ein Teil der Tertiärluft als Verbrennungsluft dem Staubbrennreaktor zugeführt und die zu behandelnden Stäube und die Verbrennungsluft durchlaufen den Staubbrennreaktor im Gleichstrom. Als Ort des Staubbrennreaktors ist der Ort oberhalb des Drehrohrofens zur Sinterung der Calciumsilikatphasen, dem Zementklinker, vorgesehen.

In der EP1334954B1 wird eine Anlage zur Herstellung von Zement mit einem weiteren Schwelofen offenbart, der zum Schwelen oder Verbrennen von schwierigen Abfallstoffen eingesetzt wird. Dieser Schwelofen ist als Drehrohrofen ausgestaltet und soll nach der Lehre der EP1334954B1 parallel zum Drehrohrofen zum Sintern der Calciumsilikatphasen, dem Zementklinker, angeordnet werden. Als besonders vorteilhafter Ort in der Anlage ist nach der Lehre dieser Druckschrift vorgesehen, den Drehrohrofen zum Schwelen und/oder Verbrennen der schwierigen Brennstoffe oberhalb des Drehrohrofens im Bereich des Calcinators anzuordnen.

Schließlich ist in der Patentanmeldung DE102012016361.4 ein als Drehrohrofen ausgestalteter Schwelofen offenbart, der nicht über dem Drehrohrofen zum Sintern des Rohmehls angeordnet ist, sondern etwa auf gleicher Höhe des Drehrohrofens, wobei dieser Schwelofen wie als Verlängerung des Drehrohrofens zum Sintern angeordnet ist. Die aus diesem Schwelofen austretenden Pyrolysegase werden in dem Calcinator als gemeinsamer Steigeschacht für die Abgase des Drehrohrofens und des Schwelofens zum Calcinieren des Rohmehls verwendet. Die vorgenannten Schwelöfen haben jedoch den Nachteil, dass sie hohe mechanische Anforderungen an das Baufundament stellen und als bewegliche Teile sehr erhebliche Anlageninvestitionen bedeuten.

Aufgabe der Erfindung ist es daher, eine Anlage zur Herstellung von Zement mit einer Brennvorrichtung für schwierige Brennstoffe zur Verfügung zu stellen, welche die Nachteile aus dem Stand der Technik überwindet.

Die der Erfindung zugrunde liegende Aufgabe wird gemäß Anspruch 1 dadurch gelöst, dass die Brennvorrichtung als ein auf dem Strömungsweg der Abgase des Drehrohrofens zum Calcinator dem Calcinator vorgeschalteter Schwanenhalsreaktor in umgekehrter U-Form ausgestaltet ist, dessen Gasaustritt oberhalb einer Tertiärluftleitung vom Kühler in den Calcinator mündet. Weitere vorteilhafte Ausgestaltungen sind in den Unteransprüchen angegeben. Ein dazu korrespondierendes Verfahren ist in Verfahrensanspruch 4 mit den dazugehörigen Unteransprüchen 5 bis 7 angegeben. Vorrichtungen gemäß Oberbegriff des Anspruchs 1 sind aus WO 2005/108892 A1 und WO 2008/120109 A1 bekannt.

Nach der Erfindung ist vorgesehen, die schwierigen Brennstoffe in einem Schwanenhalsreaktor zu verschwelen, pyrolysieren und/oder zu verbrennen, der zwischen Drehrohrofen und Calcinator angeordnet ist. Ziel der Erfindung ist es, die schwierige Verbrennung außerhalb des eigentlichen Calcinators vorzunehmen, so dass die noch brennbaren Abgase des Reaktors in den Calcinator geleitet werden können, wo die brennbaren Abgase als Wärmelieferant bei der Verbrennung mit Tertiärluft dienen. Im Calcinator, wo die Calcinierung, also die Entsäuerung des Rohmehls, stattfindet, findet somit eine saubere Gasverbrennung statt, so dass keine stückigen Brennstoffe im Calcinator nach unten fallen oder den Entsäuerungsvorgang stören. Sofern dennoch Brennstoffe unausgebrannt in den Calcinator gelangen und dort weiterverbrennen, ist in Ausgestaltung der Erfindung dafür im unteren Punkt am Fuß des Calcinators eine Notentleerung in die Ofeneinlaufkammer vorgesehen, um grobe Brennstoffstücke in den Drehrohrofen zu entleeren. Die Verschwelung, Pyrolyse oder Verbrennung der schwierigen Brennstoffe kann somit vom eigentlichen Calcinator, der durch den zunehmenden Einsatz von alternativen Brennstoffen als Brennstelle für schwierige Brennstoffe seine Aufgabe zur Calcinierung nicht mehr hinreichend ausfüllen kann, getrennt werden.

Wichtig bei der Verschwelung, der Pyrolyse und/oder der Verbrennung ist, dass diese unter unterstöchiometrischer Zugabe von Luftsauerstoff geschieht. Hierbei ist die Ausbildung von Kohlenmonoxid (CO) von untergeordneter Bedeutung. Vielmehr ist die Ausbildung von noch brennfähigen Gasen wichtig, so dass die schwer zündbaren Brennstoffe im Gaszustand oder im entgasten, festen Zustand in den Calcinator gelangen. Die Pyrolysegase können dabei rußhaltig sein, und auch höhere Kohlenstoffverbindungen aufweisen als nur Kohlenmonoxid. Wichtig ist, dass der Reaktor ein brennbares Abgas oder einen thermisch vorbehandelten festen Brennstoff liefert, das im Calcinator frei von stückigen Brennstoffresten in Gegenwart vom zu entsäuernden Rohmehl mit Hilfe der dem Calcinator zugeführten Tertiärluft verbrennt. Um die Verschwelung, Pyrolyse oder Verbrennung variabel gestalten zu können und auch um die Wärmeentwicklung innerhalb der Anlage steuern zu können, ist nach Ausgestaltung der Erfindung vorgesehen, dass zündschwieriger Brennstoff in variablen Anteilen von 10% bis 100% in den Schwanenhalsreaktor und/oder den Calcinator fließt. Der Reaktor kann also mit einer Mindestmenge von 10% Brennstoff betrieben werden, so dass der Reaktor nur einen geringen Teil der schwierigen Brennstoffe verschwelt, pyrolysiert oder verbrennt, es kann aber auch vorgesehen sein, dass der Reaktor alle variablen Anteile zwischen 10% und 100% des schwierigen Brennstoffes in der Aufteilung zwischen Reaktor und Calcinator verbrennt. In Ausgestaltung der Erfindung kann vorgewärmtes Rohmehl in variablen Anteilen von 10% bis 100% in den Schwanenhalsreaktor und/oder den Calcinator fließen. Je nach Eigenschaften des schwer zündenden Brennstoffes kann es sinnvoll sein, bereits die Wärme im Reaktor zum Calcinieren zu nutzen, und das Rohmehl kann in den Reaktor geleitet werden, um die Temperatur bei der Verschwelung, der Pyrolyse oder der Verbrennung zu kontrollieren, so dass die Temperatur nicht zu hoch wird und dadurch der Verschwelungs-, Pyrolyse- und/oder Verbrennungsprozess zu stark beschleunigt wird. Ziel der Erfindung ist es, die Abgase aus dem Reaktor im Calcinator zu verbrennen. Dazu sollen die schwer zündbaren Brennstoffe nicht in dem Reaktor ausreagieren.

Je nach Abbrandgeschwindigkeit des im Reaktor verschwelten, pyrolysierten oder verbrannten Brennstoffes kann es sinnvoll sein, etwa im Umkehrpunkt des als Schwanenhalsreaktor ausgebildeten Reaktors eine Wirbelkammer vorzusehen. Diese Wirbelkammer sorgt für eine intensive Vermischung des schwer zündbaren Brennstoffes mit der heißen Abluft des Drehrohrofens, so dass die Verweilzeit des gegebenenfalls stückigen Brennstoffes im Reaktor länger dauert und er dort vollkommen zu einem noch brennbaren Abgas verschwelt und/oder pyrolysiert.

Die erfindungsgemäße Anlage zur Herstellung von Zement kann eine Unterbrechung zwischen Drehrohrofeneinlaufkammer, die am Ende des Drehrohrofens angeordnet ist, und dem Calcinator aufweisen und in Ausgestaltung der Erfindung auch vollkommen von der Drehrohrofeneinlaufkammer getrennt sein. In diesem Fall strömen das gesamte Abgas des Drehrohrofens, also Abbrandgase des im Drehrohrofen verbrannten Primärbrennstoffes mit Primärluft und die in den Drehrohrofen aus dem Klinkerkühler eingesaugte Sekundärluft über den Reaktor in den Calcinator und zwar oberhalb der Einströmungsstelle der aus dem Klinkerkühler entnommenen Tertiärluft. In dieser Ausgestaltung der Erfindung dient die Tertiärluft im Calcinator zunächst als Hebeluft für das aus dem zweituntersten Zyklonwärmetauscher des Vorwärmers einströmenden Rohmehls, welche des Weiteren in Höhe der Eindüsungsstelle der Abbrandgase aus dem Reaktor als Verbrennungsluft für die Abbrandgase dient. Die dabei entstehende Wärme, die zur weiteren Ausdehnung der Gase führt, führt zu einer Verstärkung der Gasströmung, welche das Rohmehl beim Calcinieren in die unterste Zyklonvorwärmetauscherstufe reißt, wo das Rohmehl für die Zuleitung in den Drehrohrofen abgezweigt wird.

Um die Hebearbeit für das Abbrandgas nicht zu stark werden zu lassen, wodurch das Gas sich einerseits abkühlen kann, aber auch wodurch der Druckabfall im Reaktor für eine erwünschte Strömungsstärke zu stark werden kann, ist in der Erfindung vorgesehen, dass der Umkehrpunkt des als Schwanenhalsreaktors ausgebildeten Reaktors unterhalb des Umkehrpunktes des Calcinators liegt.

Die Erfindung wird anhand der folgenden Figur näher erläutert. Es zeigt:

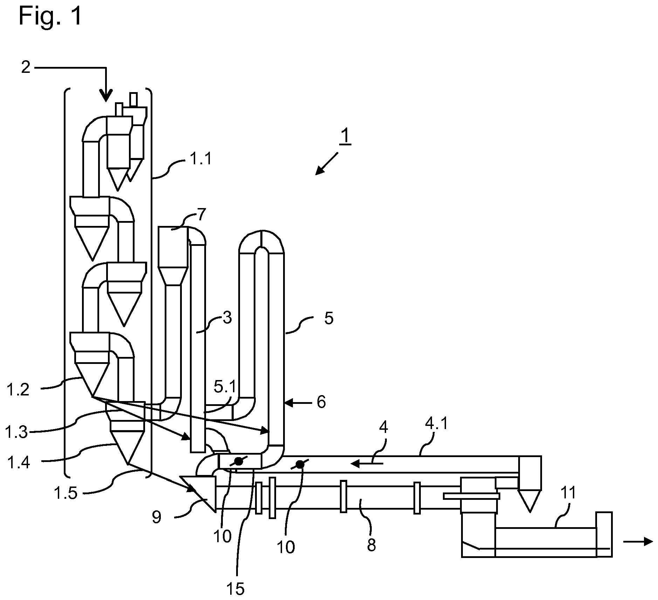

- Fig. 1: eine erfindungsgemäße Anlage zur Herstellung von Zementklinker mit einem Schwanenhalsreaktor.

In **Figur 1** ist eine erfindungsgemäße Anlage 1 zur Herstellung von Zementklinker abgebildet, in welche Rohmehl 2 in den Vorwärmer 1.1 aufgegeben wird. Das Rohmehl 2 durchläuft die einzelnen Zyklonvorwärmstufen des Vorwärmers 1.1 von oben nach unten im Gegenstrom der im Vorwärmer 1.1 aufsteigenden Abluft aus dem Calcinator 3. Im Calcinator 3 wird unter Hinzunahme von Brennstoff Wärme erzeugt, die das Rohmehl 2 entsäuert, also in einer endothermen Reaktion aus dem im Rohmehl 2 enthaltenem Kalk (CaCO₃) chemisch formal Kohlendioxid (CO₂) entfernt, so dass gebrannter Kalk als Calciumoxid (CaO) übrig bleibt. Angekommen bei Zyklonvorwärmstufe 1.2 wird das vorerhitzte Rohmehl 2 über eine Leitung 1.3 in den Fuß des Calcinators 3 geleitet, wo das Rohmehl 2 durch aus einem Klinkerkühler 11 stammende Tertiärluft 4 in einer Tertiärluftleitung 4.1 mitgerissen wird. An dieser Stelle fließt das Rohmehl 2 mit dem ansonsten im Gegenstrom strömenden Gas in der Anlage 1 statt, dass es entgegen fließt. Beim gemeinsamen Aufsteigen im Calcinator 3 passieren das Rohmehl 2 aus Leitung 1.3 und die Tertiärluft 4 aus Tertiärluftleitung 4.1 die Einströmungsstelle am Gasaustritt 5.1 für das aus dem Reaktor 5 einströmende Abgas der Verschwelung, Pyrolyse und/oder Verbrennung von schwer zündendem Brennstoff 6, das in der hier dargestellten Anlage 1 zur Herstellung von Zementklinker in einem Schwanenhalsreaktor erzeugt wird. Das Abgas aus dem Reaktor 5 brennt im Calcinator 3 und erzeugt dort eine erhebliche Wärmemenge, die in der dort stattfindenden endothermen Entsäuerungsreaktion aufgeht. Der hier dargestellte Calcinator 3 weist eine Wirbelkammer 7 am Ende des Calcinators 3 auf, wo das Abbrandgas und gegebenenfalls in den Calcinator 3 eingedüster Brennstoff vollkommen ausbrennen kann, bevor das Abgas des Calcinators 3 in den Wärmetauscher 1.1 strömt, denn im Wärmetauscher 1.1 soll nach Möglichkeit keine Stoffumsetzung mehr geschehen. Bei Passage der untersten Zyklonwärmetauscherstufe 1.4 wird das Rohmehl 2 abgetrennt und durch eine Leitung 1.5 in die Drehofeneinlaufkammer 9 eingeführt, wo das Rohmehl 2 zum Sintern im Drehrohrofen 8 weiter erhitzt wird. Um die Aufteilung der Gasströme in den Calcinator 3 zwischen Tertiärluftleitung 4.1 und Reaktorweg aufzuteilen, ist ein Klappensystem 10 vorgesehen, mit dem die Luft zwischen Tertiärluftleitung 4.1 und Reaktor 5 aufgeteilt werden kann. Der schwer zündende Brennstoff 6 wird an einer Brennstelle im Reaktor 5 gezündet, wo es jedoch aufgrund seiner schweren Entzündbarkeit nur langsam abbrennt, verschwelt oder in der Wärme des Drehofenabgases pyrolysiert.

**BEZUGSZEICHENLISTE**

| | | | |
|---|---|---|---|
| 1 | Anlage | 4.1 | Tertiärluftleitung |
| 1.1 | Vorwärmer | 5 | Reaktor |
| 1.2 | Zyklonwärmetauscherstufe | 5.1 | Einströmungsstelle / Gasaustritt |
| 1.3 | Leitung | 6 | Brennstoff |
| 1.4 | Zyklonwärmetauscherstufe | 7 | Wirbelkammer |
| 1.5 | Leitung | 8 | Drehrohrofen |
| 2 | Rohmehl | 9 | Drehrohrofeneinlaufkammer |
| 3 | Calcinator | 10 | Klappensystem |
| 4 | Tertiärluft | 11 | Klinkerkühler |

## Patentansprüche

1. Anlage (1) zur Herstellung von Zementklinker, aufweisend in Materialflussrichtung gesehen
- mindestens einen Wärmetauscher (1.1) zum Vorwärmen von Rohmehl (2),
- mindestens einen darauf folgenden Calcinator (3) zum Calcinieren des Rohmehls (2),
- mindestens einen Drehrohrofen (8) zum Sintern des calcinierten Rohmehls (2),
- mindestens einen Klinkerkühler (11) zum Kühlen des gesinterten Zementklinkers,
wobei eine Brennvorrichtung für schwierige Brennstoffe, die unvorhersehbares Zündverhalten haben, in der Regel schlecht zünden oder eine Zündhilfe in Form von starker Aufheizung und auch erster einsetzender Pyrolyse benötigen, die schwierigen Brennstoffe verschwelt, pyrolysiert und/oder verbrennt,
**dadurch gekennzeichnet, dass**
die Brennvorrichtung als ein auf dem Strömungsweg der Abgase des Drehrohrofens (8) zum Calcinator (3) dem Calcinator (3) vorgeschalteter Schwanenhalsreaktor (5) in umgekehrter U-Form ausgestaltet ist, dessen Gasaustritt (5.1) oberhalb einer Tertiärluftleitung (4.1) vom Klinkerkühler (11) in den Calcinator (3) mündet, wobei der vorgeschaltete Reaktor (5) eine Höhe aufweist, die unterhalb der Höhe eines Umkehrpunktes des Calcinators (3) liegt.

2. Anlage nach Anspruch 1,
**dadurch gekennzeichnet, dass**
der Schwanenhalsreaktor (5) im Bereich des Umkehrpunktes eine Wirbelkammer als Ausbrandkammer aufweist.

3. Anlage nach einem der Ansprüche 1 bis 2,
**dadurch gekennzeichnet, dass**
der Calcinator (3) keine direkte Verbindung mit dem Drehrohrofen (8) aufweist.

4. Verfahren zur Herstellung von Zement, aufweisend die folgenden Schritte:
- Vorwärmen von Rohmehl (2) in einer Vorwärmstufe (1.1),
- Calcinieren des Rohmehls (2) in einem Calcinator (3),
- Sintern des calcinierten Rohmehls (2) in einem Drehrohrofen (8),
- Kühlen des gesinterten Rohmehls (2) in einem Klinkerkühler (11), dessen erwärmte Kühlluft teilweise in Form von Tertiärluft (4) zur Rekuperation von Wärme in den Calcinator (3) geführt wird,
- Verbrennen von schwierigen Brennstoffen in einem Reaktor (5),
wobei der Reaktor (5) als ein auf dem Strömungsweg der Abgase des Drehrohrofens (8) zum Calcinator (3) dem Calcinator (3) vorgeschalteten Schwanenhalsreaktor in umgekehrter U-Form ausgestaltet ist, dessen Verbrennungsgase oberhalb einer Tertiärluftleitung (4.1) vom Klinkerkühler (11) in den Calcinator (3) geleitet werden, wobei der vorgeschaltete Reaktor (5) eine Höhe aufweist, die unterhalb der Höhe eines Umkehrpunktes des Calcinators (3) liegt.

5. Verfahren nach Anspruch 4, **gekennzeichnet durch**
eine unterstöchiometrische Versorgung des Reaktors (5) mit Luftsauerstoff.

6. Verfahren nach einem der Ansprüche 4 oder 5,
**gekennzeichnet durch**
einen Fluss von schwierigem Brennstoff in variablen Anteilen von 10% bis 100% in den Schwanenhalsreaktor (5) und/oder den Calcinator (3).

7. Verfahren nach einem der Ansprüche 4 bis 6,
**gekennzeichnet durch**
Einblasen von Rohmehl (2) in den Reaktor (5) in variabler Aufteilung von 10% bis 100% zwischen Reaktor (5) und Calcinator (3).

## Claims

1. Plant (1) for producing cement clinker, having, viewed in the material flow direction
- at least one heat exchanger (1.1) for preheating raw meal (2),
- at least one downstream calcinator (3) for calcining the raw meal (2),
- at least one rotary kiln (8) for sintering the calcinated raw meal (2),
- at least one clinker cooler (11) for cooling the sintered cement clinker,
wherein a combustion device for difficult fuels, which have unpredictable ignition behavior, generally ignite poorly, or require an ignition aid in the form of strong heating and also initial pyrolysis, carbonizes, pyrolyzes, and/or combusts the difficult fuels,
**characterized in that** the combustion device is embodied as a gooseneck reactor (5) in inverted U-shape, which is connected upstream from the calcinator (3) on the flow path of the exhaust gases of the rotary kiln (8) to the calcinator (3), and the gas outlet (5.1) of which opens into the calcinator (3) above a tertiary air line (4.1) from the clinker cooler (11), wherein the upstream reactor (5) has a height which is below the height of a reversal point of the calcinator (3).

2. Plant according to Claim 1,
**characterized in that** the gooseneck reactor (5) has a swirl chamber as a burn-off chamber in the region of the reversal point.

3. Plant according to any one of Claims 1 to 2, **characterized in that** the calcinator (3) does not have a direct connection to the rotary kiln (8).

4. Method for producing cement, having the following steps:
- preheating raw meal (2) in a preheater stage (1.1),
- calcining the raw meal (2) in a calcinator (3),
- sintering the calcinated raw meal (2) in a rotary kiln (8),
- cooling the sintered raw meal (2) in a clinker cooler (11), the heated cooling air of which is partially guided in the form of tertiary air (4) for the recuperation of heat in the calcinator (3),
- combusting difficult fuels in a reactor (5), wherein the reactor (5) is embodied as a gooseneck reactor in inverted U-shape, which is connected upstream from the calcinator (3) on the flow path of the exhaust gases of the rotary kiln (8) to the calcinator (3), the combustion gases of which are conducted above a tertiary air line (4.1) from the clinker cooler (11) into the calcinator (3), wherein the upstream reactor (5) has a height which is below the height of a reversal point of the calcinator (3).

5. Method according to Claim 4,
**characterized by** a substoichiometric supply of the reactor (5) with air oxygen.

6. Method according to any one of Claims 4 or 5, **characterized by** a flow of difficult fuel in variable proportions of 10% to 100% into the gooseneck reactor (5) and/or the calcinator (3).

7. Method according to any one of Claims 4 to 6, **characterized by** injection of raw meal (2) into the reactor (5) in a variable allocation of 10% to 100% between reactor (5) and calcinator (3).

## Revendications

1. Installation (1) servant à fabriquer du clinker, présentant, vu dans la direction de flux des matériaux,
- au moins un échangeur de chaleur (1.1) destiné à préchauffer de la farine brute (2),
- à la suite, au moins un calcinateur (3) destiné à calciner la farine brute (2),
- au moins un four tubulaire rotatif (8) destiné à fritter la farine brute (2) calcinée,
- au moins un refroidisseur de clinker (11) destiné à refroidir le clinker fritté,
un dispositif de combustion pour combustibles difficiles, lesquels ont un comportement à l'allumage imprévisible, s'allument généralement mal ou ont besoin d'une aide à l'allumage sous la forme d'un chauffage intensif et aussi d'un début de première pyrolyse, carbonisant à basse température les combustibles difficiles, les pyrolysant et/ou les brûlant, **caractérisée en ce que**
le dispositif de combustion est constitué en tant que réacteur à col de cygne (5), en forme de U inversé,
monté en amont du calcinateur (3) sur le chemin d'écoulement des gaz d'échappement du four tubulaire rotatif (8) vers le calcinateur (3), dont la sortie de gaz (5.1) débouche au-dessus d'une conduite d'air tertiaire (4.1) à partir du refroidisseur de clinker (11) vers l'intérieur du calcinateur (3), le réacteur (5) monté en amont présentant une hauteur qui est au-dessous de la hauteur d'un point d'inversion du calcinateur (3).

2. Installation selon la revendication 1,
**caractérisée en ce que**
le réacteur à col de cygne (5) présente une chambre de turbulence en tant que chambre de combustion complète dans la zone du point d'inversion.

3. Installation selon l'une des revendications 1 et 2, **caractérisée en ce que**
le calcinateur (3) ne présente pas de raccordement direct au four tubulaire rotatif (8).

4. Procédé de fabrication de ciment, présentant les étapes suivantes :
- préchauffage de farine brute (2) dans un étage de préchauffage (1.1),
- calcination de la farine brute (2) dans un calcinateur (3),
- frittage de la farine brute (2) calcinée dans un four tubulaire rotatif (8),
- refroidissement de la farine brute (2) frittée dans un refroidisseur de clinker (11) dont l'air de refroidissement chauffé est conduit dans le calcinateur (3) partiellement sous forme d'air tertiaire (4) pour la récupération de chaleur,
- combustion de combustibles difficiles dans un réacteur (5),
le réacteur (5) étant constitué en tant que réacteur à col de cygne, en forme de U inversé, monté en amont du calcinateur (3) sur le chemin d'écoulement des gaz d'échappement du four tubulaire rotatif (8) vers le calcinateur (3), dont les gaz de combustion sont conduits au-dessus d'une conduite d'air tertiaire (4.1) à partir du refroidisseur de clinker (11) vers l'intérieur du calcinateur (3), le réacteur (5) monté en amont présentant une hauteur qui est au-dessous de la hauteur d'un point d'inversion du calcinateur (3).

5. Procédé selon la revendication 4,
**caractérisé par** une alimentation hypostoechiométrique du réacteur (5) avec de l'oxygène de l'air.

6. Procédé selon l'une des revendications 4 ou 5, **caractérisé par**
un flux de combustibles difficile dans des proportions variables de 10 % à 100 % dans le réacteur à col de cygne (5) et/ou dans le calcinateur (3).

7. Procédé selon l'une des revendications 4 à 6, **caractérisé par**
l'injection de farine brute (2) dans le réacteur (5) selon une répartition variable de 10 % à 100 % entre le réacteur (5) et le calcinateur (3).
